# EUROPEAN PATENT APPLICATION

(11) **EP 4 317 533 A1**
(43) Date of publication of application: **07.02.2024**
(21) Application number: 22775017.1
(22) Date of filing: 04.03.2022
(51) Int. Cl.: C23F 15/00, C25D 5/30, C25D 7/00, C25D 2/00, C23C 18/38

(54) **DISSIMILAR METAL JOINED BODY AND METHOD FOR MANUFACTURING SAME**

(30) Priority: 23.03.2021 JP 2021049102
(71) Applicant: Akita Prefectural Government, Akita-shi, Akita 010-8570 (JP); Aster Co., Ltd., Yokote-shi, Akita 013-0054 (JP)
(72) Inventor: SUZUKI, Toshio, Akita-shi, Akita 010-1623 (JP); HONGO, Takenobu, Ishikawa-gun, Fukushima 963-8302 (JP)
(74) Representative: TBK
(86) International application number: PCT/JP2022/009393
(87) International publication number: WO 2022/202221

(57) **Abstract**

Provided are a dissimilar metal welded body and a method of manufacturing the same, capable of preventing galvanic corrosion in a connection portion between dissimilar metals in the dissimilar metal welded body and of sufficient insulation coating being applied even when the insulation coating is applied to the dissimilar metal welded body. The dissimilar metal welded body (10) includes a first member (11) made of a metal containing aluminum as a main component, a second member (12) made of a metal containing copper as a main component, a welded portion (16) formed by pressure-welding an end face of the first member (11) and an end face of the second member (12) to each other, and a metal film (15) that continuously covers a substantially entire part of the first member (11) and at least a part of the second member (12). The metal film (15) is a film made of a metal containing copper as a main component.

## Description

### Technical Field

The present invention relates to a dissimilar metal welded body and a method of manufacturing the same.

### Background Art

Conventionally, in a stator or the like that constitutes a motor, a plurality of coils are arranged annularly in a plurality of slots (teeth) provided on the inner peripheral surface of an annular stator core. In this case, the annularly arranged coils are configured such that both end portions (a starting end portion and a terminal end portion) of a helical structure protrude toward one side of an axial direction of the stator core (for example, upward). These end portions are connected to wiring members such as bus bars.

In such a configuration, there is known a configuration in which aluminum (Al) is employed as a coil member material for the purpose of weight reduction or the like, while excellent conductors such as copper or iron are used as the wiring member material for lead-out portions (terminals) of the coil, and bus bars (see Patent Literature 1) .

### Citation List

### Patent Literature

Patent Literature 1: Japanese Patent Application Laid-Open No. 2020-137253

### Summary of the invention

### Technical Problem

However, when a member having aluminum as a main component (for example, a coil) is in a direct contact with a member containing copper as a main component (for example, a wiring member such as a terminal or a bus bar), galvanic corrosion (electrocorrosion) occurs in the contact portion, adversely affecting the characteristics of electrical components.

In the coils to be attached to the stator core and the wiring members of the coils in particular, there is a high demand for covering the periphery of these coils and the wire members with an insulating film (resin film). When the insulating film is applied by electrodeposition of a macromolecular material in particular the underlying metals (that are the coils and the wiring members) are different from each other, coating of the insulating film cannot be achieved uniformly, resulting in problems of lowered withstand voltage and space factor of the coils.

In view of these circumstances, an object of the present invention is to provide a dissimilar metal welded body and a method of manufacturing the same, capable of preventing galvanic corrosion in a connection portion between dissimilar metals in the dissimilar metal welded body and of sufficient insulation coating being applied even when the insulation coating is applied to the dissimilar metal welded body. Solution to Problem

The present invention relates to a dissimilar metal welded body including a first member made of a metal containing aluminum as a main component, a second member made of a metal containing copper as a main component, a welded portion formed by pressure-welding an end face of the first member and an end face of the second member to each other, and a metal film that continuously covers a substantially entire part of the first member and at least a part of the second member. The metal film is a film made of a metal containing copper as a main component.

The present invention also relates to a method of manufacturing a dissimilar metal welded body, including a step of welding a first member made of a metal containing aluminum as a main component and a second member made of a metal containing copper as a main component by pressure-welding an end face of the first member and an end face of the second member to each other, and a step of continuously covering a substantially entire part of the first member and at least a part of the second member with a metal film containing copper as a main component.

The present invention also relates to a dissimilar metal welded body, including a first member containing a first metal as a main component, a second member containing a second metal as a main component that is nobler than the first metal, a welded portion formed by pressure-welding an end face of the first member and an end face of the second member, and a metal film that covers at least the welded portion. The metal film is a plated film containing the second metal as a main component.

The present invention also relates to a method of manufacturing a dissimilar metal welded body, including a step of pressure-welding an end face of a first member containing a first metal as a main component and an end face of a second member containing a second metal as a main component to each other to form a welded portion, and a step of performing a plate treatment to cover at least the welded portion with a metal film containing the second metal as a main component. Advantageous Effects of Invention

The present invention can provide a dissimilar metal welded body and a method of manufacturing the same, capable of preventing galvanic corrosion in a connection portion between dissimilar metals in the dissimilar metal welded body and of sufficient insulation coating being applied even when the insulation coating is applied to the dissimilar metal welded body.

### Brief Description of Drawings

Fig. 1 includes schematic views of a dissimilar metal welded body of an embodiment, in which (A) is an external plan view, (B) is a cross-sectional view, (C) is a cross-sectional view, (D) is a cross-sectional view, and (E) is a flowchart showing an example of a method of manufacturing a dissimilar metal welded body.
Fig. 2 includes schematic views illustrating a welded body base material in the present embodiment, in which (A) is a plan view, (B) is a side view, and (C) is a side view.
Fig. 3 includes schematic views illustrating the welded body base material in the present embodiment in the present embodiment, in which (A) is a plan view, (B) is a plan view of a coil piece, (C) is a plan view of the coil piece, (D) is a cross-sectional view of the coil piece, (E) is a cross-sectional view of the coil piece, (F) is a plan view of a terminal, and (G) is a plan view of the terminal.
Fig. 4 includes schematic views of a dissimilar metal welded body 10 of the present embodiment, in which (A) is a plan view, (B) is a cross-sectional view, (C) is a cross-sectional view, and (D) is a cross-sectional view.
Fig. 5 includes explanatory views of the method of manufacturing a dissimilar metal welded body of the present embodiment, in which (A) is a flowchart, and (B) to (D) are plan views showing an example of a manufacturing step.
Fig. 6 includes diagrams showing the dissimilar metal welded body of the present embodiment, in which (A) is a cross-sectional view, and (B) is a flowchart of the manufacturing method.

### Description of Embodiments

Hereinafter, embodiments of the present invention will be described with reference to the drawings.

### <Dissimilar metal welded body>

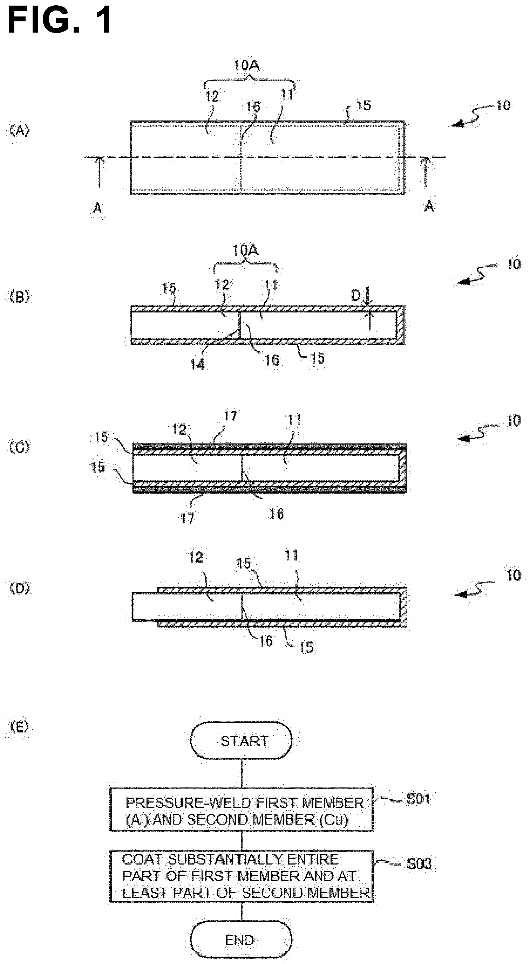

Fig. 1 includes views showing an outline of a dissimilar metal welded body 10 of the present embodiment, in which Fig. 1(A) is an external plan view, and Fig. 1(B) is a cross-sectional view taken along line A-A of Fig. 1(A). Fig. 1(C) and Fig. 1(D) are cross-sectional views corresponding to A-A cross-section of Fig. 1(A), showing another example of the dissimilar metal welded body 10. In the drawings and subsequent drawings, some of the configurations are omitted as appropriate, for simplification of the drawings. The size, shape, thickness, and the like of the members are appropriately exaggerated in the drawings and the subsequent drawings.

Referring to Fig. 1(A) and Fig. 1(B), the dissimilar metal welded body 10 of the present embodiment includes: a welded body base material 10A including a first member 11 made of a first metal, a second member 12 made of a second metal, and a welded portion 16; and a metal film 15 covering at least a part of the welded body base material 10A. The first metal is a metal that is base relative to the second metal. Specifically, the first metal used herein is a metal containing aluminum (Al) as a main component. The second metal is a metal that is noble relative to the first metal. Specifically, the second metal used herein is a metal containing copper (Cu) as a main component.

Here, the "metal containing aluminum as a main component" refers to a metal containing 50% or more of pure aluminum or an aluminum alloy relative to the entire amount. When the metal contains other components different from pure aluminum or an aluminum alloy, the type and number of other components can be selected from a variety of options. In addition, the metal may contain 100% (or substantially 100%) of pure aluminum or an aluminum alloy. Hereinafter, in the present specification, the first metal constituting the first member 11 may be simply referred to as "aluminum (Al)", which means "metal containing aluminum as a main component".

The term "metal containing copper as a main component" refers to a metal containing 50% or more of pure copper or a copper alloy relative to the entire amount. When the metal contains other components different from pure copper or a copper alloy, the type and number of other components can be selected from a variety of options. In addition, the metal may contain 100% (or substantially 100%) of pure copper or a copper alloy. Hereinafter, in the present specification, the second metal constituting the second member 12 may be simply referred to as "copper (Cu)", which means "metal containing copper as a main component".

The first member 11 is, for example, an electroconductive component, and the second member 12 is, for example, a terminal, a wiring, an electrode, or the like that is connected to the electroconductive component. Alternatively, the second member 12 may be, for example, an electroconductive component, and the first member 11 may be, for example, a terminal, a wiring, an electrode, or the like that is connected to the electroconductive component.

Referring to Fig. 1(B), the welded portion (dissimilar welded portion) 16 is a portion formed by pressure-welding the end surfaces of the first member 11 and the second member 12. More specifically, the welded portion 16 is a portion where the first member 11 and the second member 12 are welded by cold pressure-welding. The welded portion 16 in the present embodiment is a region including a boundary 14 between the first member 11 and the second member 12, and refers to a region where atoms of the first metal and the second metal are bonded to each other.

The metal film 15 is a metal film containing a metal of the same type as a noble metal among those contained in the first member 11 and the second member 12, and is a thin film having a substantially uniform film thickness D. The metal film 15 is, for example, a plated film (copper plated film) made of a metal containing copper as a main component, and covers substantially the entire part of the welded body base material 10A as shown in Figs. 1(A) and 1(B). Specifically, the metal film 15 continuously and integrally covers substantially the entire part of the first member 11 and welded portion 16, and at least a part of the second member 12. Here, the term "substantially the entire part of the first member 11" refers to a region that includes a substantial main portion for realizing the function of the first member 11 and that occupies 50% or more of the entire outer surface of the first member 11, preferably 70% or more of the entire outer surface, preferably 80% or more of the entire outer surface, and more preferably, refers to a region that occupies substantially 100% of the entire outer surface of the first member 11. The term "substantially 100%" means that there is no intentionally excluded region.

With such a configuration, as shown in Fig. 1(A), the dissimilar metal welded body 10 is a structure made of one type of metal (copper) as a whole when viewed from outside, but the internal structure is a welded body composed of aluminum (the first member 11) and copper (the second member) as shown in Fig. 1(B). More specifically, in the second member 12 portion, since the second member 12 and the metal film 15 are made of the same type of metal, they are configured as an integral copper member. In the first member 11 portion, they are configured as a member having a two-layer (double) structure made of aluminum (the first member 11) and copper (the metal film 15).

The thickness D of the metal film 15 is, for example, 3 µm or less, specifically, about 100 nm to about 3 µm, preferably about 300 nm to about 2 µm, and more preferably about 500 nm to about 1.5 µm. When the metal film 15 is a plated film, the film can be formed by, for example, an electroplating method.

Furthermore, as shown in Fig. 1(C), the dissimilar metal welded body 10 is further provided with an insulating film 17 on the surface of the metal film 15 as necessary. The insulating film 17 is, for example, a resin film made of a macromolecular material. Since the surface of the dissimilar metal welded body 10 of the present embodiment is substantially entirely covered with a type of (copper) metal film 15, favorable application of the insulating film 17 can be achieved. In particular, if the insulating film 17 is applied by electrodeposition of a macromolecular material or the like, there is a problem that a difference in the deposition film thickness occurs when the underlying metals are different from each other. According to the present embodiment, however, the underlying metal as a whole (the metal film 15) is one type of metal (copper), so that uniform application of the insulating film 17 is possible.

The metal film 15 needs to be configured to continuously and integrally cover substantially the entire portion of the outer surface of the first member 11, the dissimilar welded portion 16, and at least a part of the second member 12 in continuity with the dissimilar welded portion 16. Therefore, for example, as shown in Fig. 1(D), the metal film 15 may not be provided in a part of the second member 12. Since the second member 12 and the metal film 15 are integrated with the same type of metal (copper), they form a structure made of copper as a whole as shown in Fig. 1(A) when viewed from outside also in the case of Fig. 1(D). Also in Fig. 1(D), an insulating film 17 may be provided on the surface of the metal film 15 (partially on the surface of the second member 12) in a similar manner to one shown in Fig. 1(C) .

The metal film 15 is not limited to a plating film as long as the film is made of the same type of metal (relatively noble metal) as that of the second member 12, and the metal film 15 may be a film formed by vapor deposition or the like. As a method of forming the metal film 15, any optional method can be adopted, and the metal film is a film formed on the surface of the welded body base material 10A in which the first member 11 and the second member 12 are welded to each other.

### <Method of manufacturing dissimilar metal welded body>

A method of manufacturing the dissimilar metal welded body 10 will be described with reference to Fig. 1(E). Fig. 1(E) is a flowchart showing an example of a method of manufacturing the dissimilar metal welded body 10 according to the present embodiment. The method of manufacturing the dissimilar metal welded body 10 includes a step (step S01) of welding the first member 11 made of a metal containing aluminum as a main component and the second member 12 made of a metal containing copper as a main component by pressure-welding end faces thereof to each other, and a step (step S03) of continuously covering the substantially entire part of the first member 11 and at least a part of the second member 12 with the metal film 15 containing copper as a main component. The metal film 15 is formed by a plate treatment, for example. When the metal film 15 is formed by the plate treatment, for example, an electroplating method can be used.

Before the metal film 15 is formed, the welded body (welded body base material) of the first member 11 and the second member 12 may be subjected to a zincate treatment once or a plurality of times in advance. The zincate treatment performed can replace the surface of the first member 11 with zinc.

When the metal film 15 containing copper as a main component is formed on the welded body base material, having been subjected to a zincate treatment, by a plate treatment, zinc on the surface of the first member 11 is replaced with copper, so that the metal film 15 having good adhesive properties is formed. The metal film 15 formed in this way can significantly suppress the formation of pinholes while having a thin film thickness. In general, abnormal grains grow as the thickness D of the metal film 15 increases, and so the film thickness D is preferably 3 µm or less. When the film is formed to have a thickness of about several tens of nm, it is impossible to sufficiently cover the irregularities on the surface of the member 11. Therefore, the film thickness D is optimized within the range of 100 nm to 3 µm, preferably about 300 nm to about 2 µm, and more preferably about 500 nm to about 1.5 µm.

In addition, when it is necessary to fix the welded body base material to a jig or the like in the process of forming the metal film 15, for example, a fixing region that is fixed to the jig or the like may be set to the welded body base material. In this case, after the metal layer 15 is formed, the fixing region can be removed (cutting or the like). The fixing region is preferably made of a metal (copper) which is the same type as that of the second member 12, and preferably provided in continuity with the second member 12, for example. In this manner, the metal film 15 is formed over the first member 11 and the welded portion 16 in a region which occupies substantially 100% of the entire outer surface thereof.

### <Terminals-welded Coil>

Hereinafter, the dissimilar metal welded body 10 of the present embodiment will be described in detail by using the case of a terminals-welded coil as an example. The dissimilar metal welded body (terminals-welded coil) 10 is a structure formed by welding a coil as the first member 11 and a terminal as the second member 12. The coil 11 is attached to a stator of a motor, and the terminal 12 is connected to both end portions (lead-out portions) of a spiral structure of the coil 11.

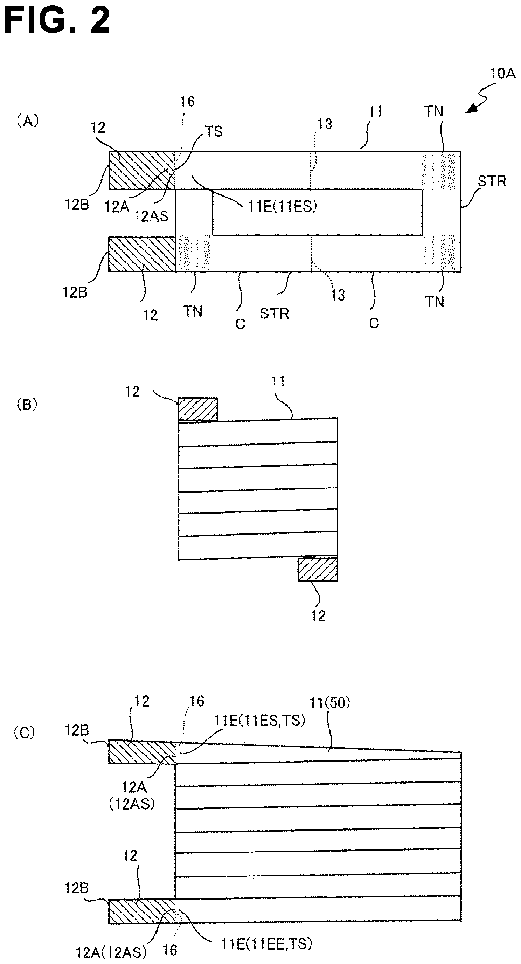

Fig. 2 includes schematic views illustrating an example of the dissimilar metal welded body (terminals-welded coil) 10 of the present embodiment, showing the configuration of the dissimilar metal welded body 10 before being covered with a metal film 15 (the configuration in the state of a welded body base material 10A). Fig. 2(A) is a front view of the coil 11 as viewed from a helical axis direction. Fig. 2(B) is a side view of the coil 11 as viewed from the left direction of Fig. 2(A). Fig. 2(C) is a side view of the coil 11 as viewed from the lower side of Fig. 2(A).

As shown in Fig. 2, the welded body base material 10A of the dissimilar metal welded body (terminals-welded coil) 10 in the present embodiment is formed by pressure-welding an end face of the coil (first member) 11, made of a metal containing aluminum as a main component, and an end face of the terminal (second member) 12, made of a metal containing copper as a main component.

Specifically, the welded body base material 10A has end portions 11E (hereinafter referred to as coil end portions 11E) of a winding (helical structure) of the coil 11, and the end portions 11E are pressure-welded to the terminals 12. More specifically, the coil 11 has a set of coil end portions 11E (a starting end portion 11ES and a terminal end portion 11EE), and at least one of the coil end portions 11E is connected to the terminal 12. In the present embodiment, the terminals-welded coil 10 is described by taking as an example the configuration in which both the coil end portions 11E (the starting end portion 11ES and the terminal end portion 11EE, see Fig. 2(C)) of the coil 11 are connected to the terminals 12, for example. In this example, the terminals 12 are similar in configuration (shape) to each other. However, the terminals 12 respectively connected to the starting end portion 11ES and to the terminal end portion 11EE may be different in shape from each other. One of the coil end portions 11E (the starting end portion 11ES or the terminal end portion 11EE) may be connected to the terminal 12.

The coil 11 in the present embodiment is attached to, for example, a teeth portion of a stator core to constitute a stator, for example. In this case, all the turn portions constituting the helical structure of a single coil 11 are configured to be able to fit one teeth portion. In other words, the coil 11 is a so-called concentrated winding coil in which the axes of respective turn portions of the helical structure substantially coincide (the respective turn portions are substantially superposed in a helical axis direction of the coil 11). In this example, the coil 11 is also a so-called edgewise coil having a helical structure formed with flat conductors.

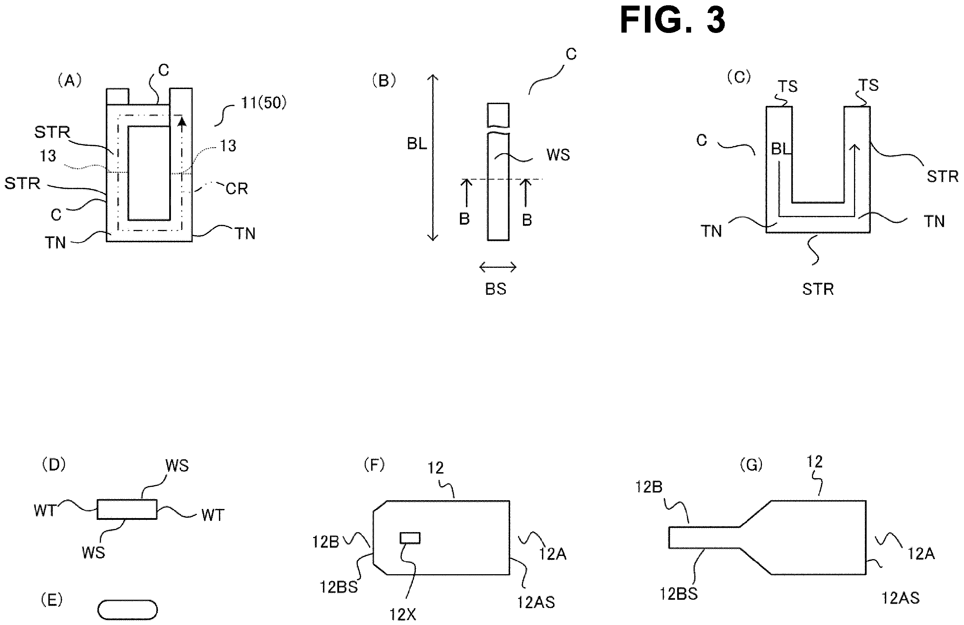

Fig. 3 includes schematic views illustrating component members of the welded body base material 10A. Fig. 3(A) is a front view of the coil 11 in a completed state as viewed from a helical structure axis direction. Figs. 3(B) and 3(C) are plan views showing an example of flat conductors C constituting the coil 11. Figs. 3(D) and 3(E) are enlarged views of cross sections along line B-B in Fig. 3(B). Figs. 3(F) and 3(G) are schematic views showing an example of the terminal 12. Figs. 3(F) to 3(H) are plan views showing an example of the terminal 12. Fig. 3(I) is a side view showing an example of the terminal 12.

With reference to Fig. 3, the configuration of the coil 11 will be further described. As shown in Figs. 3(A) to 3(C), the coil 11 is formed into a helical structure 50 by connecting the strip-shaped flat conductors C in their straight portions STR along a strip longitudinal direction (helical traveling direction) BL, butting and pressing (pressure-welding, such as cold pressure-welding) the end faces of the flat conductors C in the helical traveling direction against each other so that the flat conductors C are continuously joined to have a desired number of turns. A region for one turn of the helical structure 50 (hereinafter referred to as a region CR for one turn) has winding corner portions in a substantially square shape. Both an outer peripheral side and an inner peripheral side of the helical structure 50 are (substantially) rectangular in the front view (Figs. 3(A) and 2(A)) as viewed from the axis direction of the helical structure 50. The flat conductors C constituting the coil 11 are also referred to as coil pieces C in the following description.

As shown in Fig. 3(B), the flat conductor (coil piece) C in the present embodiment is a conductor having a cross section (B-B line cross section) in a rectangular shape as shown in Fig. 3(D) or a rectangular shape with rounded corners as shown in Fig. 3(E), when the flat conductor C is sectioned, for example, in a direction (a strip transverse direction BS) crossing (orthogonal to) the straight portion along the strip longitudinal direction BL (the traveling direction of the helical structure). Specifically, the coil piece C is a strip-shaped member long in a prescribed direction, having two wider surfaces WS facing each other and two narrower surfaces WT facing each other. In the following description, as an example of the flat conductor C, a flat conductor having an (substantially) rectangular shape in cross section that is orthogonal to the strip longitudinal direction as shown in Fig. 3(D) will be taken as an example. The surfaces of the coil end portions 11E (the starting end portion 11ES and the terminal end portion 11EE), which are parallel to cross sections (cross sections shown in Figs. 3(D) and 3(E)) of the coil 11 when sectioned in the direction crossing (orthogonal to) the straight portion STR extending in the traveling direction of the helical structure (the strip longitudinal direction BL) of the coil 11, are referred to as end faces TS of the coil 11.

The flat conductors (coil pieces) C are each obtained by punching, for example, a plate-shaped aluminum (for example, with a thickness of about 0.1 mm to about 5 mm) into a desired shape. The flat conductors (coil pieces) C each have at least the straight portion STR and at least one direction change portion TN. Here, the direction change portion TN is a region bent to change the extending direction of the strip longitudinal direction BL. At least one (preferably all) of the direction change portions TN desirably has a shape that is not a curve (for example, a substantially rectangular shape). In this example, the direction change portions TN are substantially square-shaped regions, as shown by hatching in Fig. 2(A). The end faces TS of the coil piece C in the present embodiment position in the straight portion STR, excluding the direction change portions TN, in the coil piece C. In the following example, a case will be exemplified in which one coil piece C has a (substantially) U-shape having two substantially rectangular direction change portions TN (corner portions) as shown in Fig. 3(C). However, the shape of the coil pieces C is not limited to this. For example, the coil pieces C may be in a substantially L-shape or a substantially C-shape. All the coil pieces C may have the same shape, or may have a combination of different shapes. When the coil pieces C of different shapes are combined, the coil pieces C may include linear (I-shaped) coil pieces C without any direction change portion TN.

By pressure-welding (for example, cold pressure-welding) such a plurality of flat conductors C with the end faces TS in the helical traveling direction being butted against each other, coil piece welded portions 13 are formed in the straight portions STR excluding the direction change portion TN in the helical structure 50 (the regions CR for one turn) as shown in Figs. 2(A) and 3(A). In this example, the coil piece welded portions 13 are welded portions between metals of the same kind.

In Fig. 2(A) or the like, the coil piece welded portions 13 are indicated by dashed lines for the convenience of description. However, since the cold pressure welding provides atomic bonding of the metal, the coil piece welded portions 13 formed by cold pressure welding between the coil pieces C made of the same metal (Cu) are integrally and reliably welded with a visually unrecognizable boundary. As a result, as compared with the configuration in which the coil pieces C are planarly connected with an adhesive (sealant, brazing, etc.) or connected by welding, etc., the stability of the coil piece welded portions 13 can be considerably enhanced.

Since the coils 11 can be configured by connecting the coil pieces C punched into desired shapes (for example, a U-shape having substantially rectangular direction change portions TN (corners)), the shape (the shape of the inner peripheral side in particular) of the coils 11 in the plan view (Fig. 3(A)) can be made into a substantially rectangular shape. Therefore, in the case where, for example, the coils 11 are attached to the stator of a motor, the space factor of the coils 11 can be increased. As a result, the motor employing the coils 11 can achieve low resistance and high efficiency. Furthermore, the coils 11 made of aluminum can reduce their weight and cost to 1/3 of those of the coils made of copper and having the same shape, for example.

As shown in Fig. 3(F), the terminal 12 includes a first end portion 12A to be connected to the coil end portion 11E and a second end portion 12B to be connected to an external component member (for example, a wiring member connected to a power source, a bus bar, other parts, etc.).

The terminal 12 may have any shape, depending on the configuration of a drawing-out side of the coil 11. For example, as shown in Fig. 3(F), the first end portion 12A on the side to be connected to the coil end portion 11E may have the shape of a flat conductor similar to the shape of the coil end portion 11E, while the second end portion 12B may have an engagement portion 12X to be engaged with other component members. As shown in Fig. 3(G),the first end portion 12A may also have the shape of a flat conductor similar to the shape of the coil end portion 11E, while the second end portion 12B may have an end face 12BS having a different shape, such as the shape of a round wire or a thin (thick) flat conductor. Although illustration is omitted, the terminal 12 may include one or more bent portions in a two-dimensional plane over a region from the first end portion 12A to the second end portion 12B, may include one or more bent portions in a three-dimensional space, or may also include a curved portion.

In the present embodiment, the coil end portion 11E and the first end portion 12A of the terminal 12 are directly butted and welded to each other. Specifically, the end face TS of the coil end portion 11E and an end face 12AS of the first end portion 12A are butted and pressed (for example, cold pressure-welded) against each other to form a welded portion 16, as shown in Figs. 2(A) and 2(C). In this example, the coil piece welded portion 13 is a welded portion between metals of the same kind, whereas the welded portion 16 between the coil 11 made of aluminum and the terminal 12 made of copper is a dissimilar welded portion.

Thus, in the present embodiment, the coil 11 and the terminal 12 are welded by cold pressure welding, so that the coil 11 and the terminal 12 can be integrated continuously and smoothly. Therefore, it is possible to suppress increased resistance in the welded portion 16 as compared with the case where the coil 11 and the terminal 12 are bonded by welding, bonding, or screwing, thereby, it is also possible to avoid a complicated structure (to configure the welded portion 16 to the minimal requirement).

Even in the case where, for example, the coil 11 is made of lightweight aluminum, the terminal 12 can be made of copper having sufficient conductivity, which makes it possible to weld the terminal 12 and the wiring member (such as a bus bar) by welding. This means that conventional devices for welding metal members of the same kind (for example, devices for copper-to-copper welding) can be used. Therefore, welding failure due to welding of different materials can be avoided, and welding can be facilitated without adopting separate (special) devices or steps for welding different materials. As compared with the case of manufacturing the coils 11 with, for example, copper or the like, the cost can be reduced to 1/3 and the weight can also be reduced to 1/3. In addition, sufficient connection strength can be achieved while reducing the resistance of the wiring members. Therefore, the coils 11 are usable in a high current range, and when the coils 11 are adopted to motors, lightweight, inexpensive, and even more efficient motors can be implemented.

On the other hand, there are also several problems in the structure (welded body base material 10A) where aluminum and copper are in direct contact with each other. First, galvanic corrosion may occur at the welded portion (dissimilar welded portion) 16 between different metals due to the difference in the ionization tendency between the different metals, and may impair the characteristics of the coil 11. Second, the coil 11 to be attached to a stator may be covered with an insulating film including the terminal 12 and the bus bar portion. However, there is a problem that the insulating film cannot be formed satisfactorily. Specifically, as the insulating film, a macromolecular resin film may be formed by, for example, electrodeposition. However, it is difficult to uniformly apply the insulating film because the metals to be the underlying material are different from each other. As a result, there is a problem that the coil 11 cannot reliably exhibit a desired withstand voltage.

Therefore, in the present embodiment, at least the dissimilar welded portion 16 of the welded body base material 10A is covered with a thin metal film 15 containing copper as a main component.

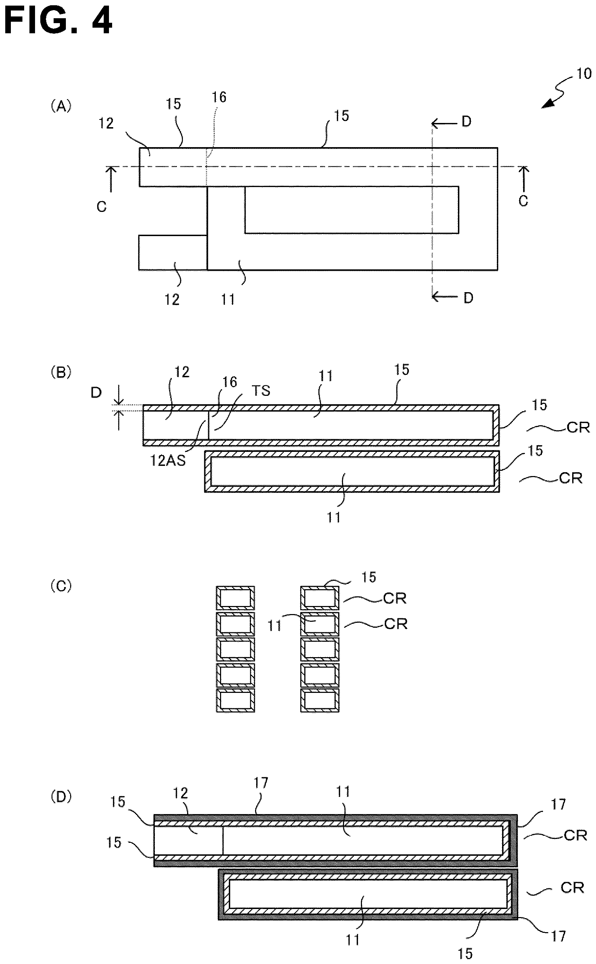

Fig. 4 includes views showing a dissimilar metal welded body (terminals-welded coil) 10 of the present embodiment, wherein Fig. 4(A) is an external plan view, Fig. 4(B) is a cross-sectional view taken along line C-C in Fig. 4(A), Fig. 4(C) is a cross-sectional view taken along line D-D in Fig. 4(A), and Fig. 4(D) is a cross-sectional view corresponding to the cross section taken along the line C-C in Fig. 4(A). In Fig. 4(B) and Fig. 4(D), a description of a part of the configuration (a lower region CR for one turn in Fig. 4(A)) is omitted.

As shown in Fig. 4, in the dissimilar metal welded body (terminals-welded coil) 10, a substantially entire part of the coil 11, the dissimilar welded portion 16, and an outer surface of at least a part of the terminal 12 in continuity with the dissimilar welded portion 16 are continuously and integrally covered with the copper metal film 15. That is, the terminals-welded coil 10 is a structure in which aluminum is not substantially visually observed when viewed from outside (Fig. 4(A)), and is observed as a terminals-welded coil formed entirely of copper. On the other hand, as shown in Fig. 4(B), the internal structure is a welded body of dissimilar metals between the coil 11 made of aluminum and a terminal 12 made of copper.

Here, the term "substantially the entire part of the coil 11" has the same meaning as the term "substantially the entire part of the first member 11" described above. Specifically, the term "substantially the entire part of the coil 11" refers to a region that includes a substantial main portion (in this case, a helical structure portion) for realizing the function of the coil 11, and that occupies 50% or more of the entire outer surface of the coil 11, preferably 70% or more of the entire outer surface, preferably 80% or more of the entire outer surface, and more preferably, refers to a region that occupies substantially 100% of the entire outer surface of the coil 11 (excluding the end face TS that is in contact with the end face 12AS of the terminal 12). Furthermore, the term "substantially 100%" means that there is no intentionally excluded region. In this case, as one example, a region of the coil 11 that occupies substantially 100% of the entire outer surface thereof is covered with the metal film 15 excluding the end face TS thereof that is to be in contact with the end face 12AS of the terminal 12. That is, the coil 11 portion, as shown in Fig. 4(C), is a helical structure body including a double structure in which the copper metal film 15 is applied onto the surface of the aluminum base material continuously in the helical traveling direction.

The metal film 15 may be provided on substantially the entire part of the terminal 12 on the terminal 12 side. However, since the metal film 15 is made of the same metal (Cu) as that of the second member (herein, the terminal) 12, the formed region thereof on the second member (the terminal) 12 side can be selected from a variety of options as long as it covers at least a part of the terminal 12 that is contiguous to the dissimilar welded portion 16. The term "substantially the entire part of the terminal (second member) 12" has the same meaning as the term "substantially the entire part of the first member 11" described above.

The metal film 15 is, for example, a copper plating film, but may be a film applied (formed) by other methods (for example, vapor deposition or the like). The film thickness D thereof is, for example, 3 µm or less, specifically, about 100 nm to about 3 µm, preferably about 300 nm to about 2 µm, and more preferably about 500 nm to about 1.5 µm.

For example, when formed by a plate treatment, the metal film 15 having good adhesive properties can be formed by performing a zincate treatment in advance. In addition, even if the film thickness of the metal film 15 is, for example, 1 µm or less, formation of pinholes can be suppressed.

According to such a configuration, since the surfaces of aluminum (coil 11), the dissimilar welded portion 16, and copper (terminal 12) are continuously covered with the same metal (copper) that is more noble than aluminum, galvanic corrosion of the dissimilar welded portion 16 can be prevented.

Fig. 4(D) is a cross-sectional view corresponding to Fig. 4(B), showing a configuration in a case where the surface of the terminals-welded coil 10 is further covered with the insulating film 17. Even in the case where the insulating film 17 is provided in this manner, since the underlying material is entirely made of the same metal (copper), the insulating film 17 can be formed in good condition.

The method of forming the insulating film 17 can be selected from a variety of options, and the film can be formed by, for example, electrodeposition of a macromolecular material. In this case, for example, even when the insulating film 17 is formed on the surface of the metal film 15, the formation of the metal film 15 by a plate treatment can suppress variations in the film thickness of the insulating film 17 and can achieve favorable application.

### <Method of manufacturing terminals-welded coil>

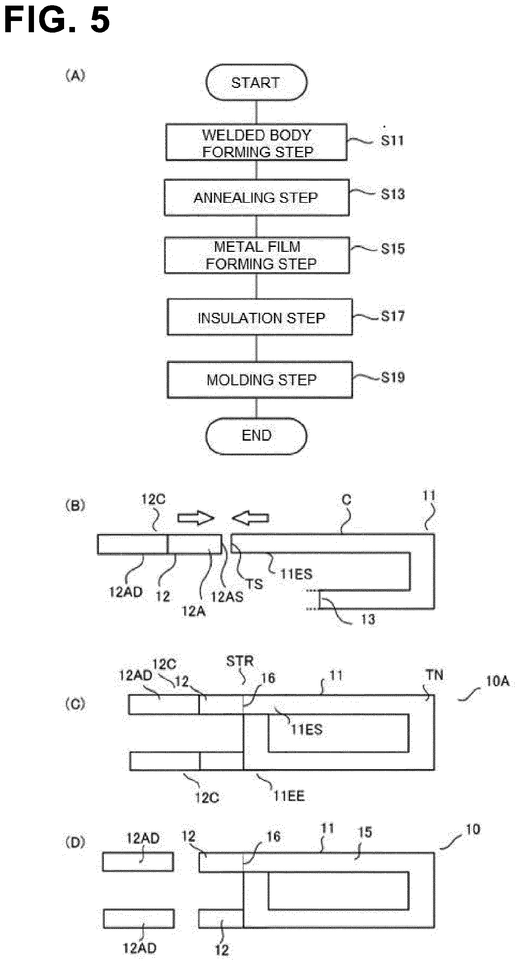

With reference to Fig. 5, a method of manufacturing the terminals-welded coil 10 of the present embodiment will be described. Fig. 5(A) is a flowchart showing an example of the method of manufacturing the terminals-welded coil 10. Figs. 5(B) to 5(D) are plan views showing part of the method of manufacturing the terminals-welded coil 10.

The method of manufacturing the terminals-welded coil 10 includes, for example, a welded body forming step, an annealing step, a metal film forming step, and a molding step. Here, a description will be given of the case where, for example, the welded body forming step (step S11), the annealing step (step S13), the metal film forming step (step S15), an insulation step (step S17) and the molding step (step S19) are performed in this order as shown in Fig. 5(A).

The welded body forming step (step S11) includes a step of welding a first member (coil) 11 made of metal containing aluminum as a main component and a second member (terminal) 12 made of metal containing copper as a main component by pressure welding of the respective end faces to form the welded body base material 10A.

Specifically, the coil 11 is formed first. More specifically, as shown in Fig. 3(C), a plurality of strip-shaped coil pieces C (for example, the coil pieces C in a substantially U-shape), which can be connected into the helical structure 50, is prepared. One end face TS of one of the coil pieces C in the strip longitudinal direction BL and one end face TS of another coil piece C in the strip longitudinal direction BL are butted and pressed against each other, and this operation is repeated for the number of times corresponding to a prescribed number of turns to form the coil 11 (see Fig. 3(A)). The two coil pieces C are welded together in the straight portion STR excluding the direction change portion (corner portion) TN. After the pressure welding of the coil pieces C, burrs are generated at the coil piece welded portion 13. Therefore, after (each) pressure welding, deburring is performed.

After the coil 11 is formed, the starting end portion 11ES side of the coil 11 and a terminal piece 12C are held, and the starting end portion 11ES (end face TS) and the end face 12AS of the first end portion 12A of the terminal piece 12C are butted against each other as shown in Fig. 5(B).

Here, the terminal piece 12C is a member formed by providing an excess fixed region 12AD to the terminal 12 in a completed shape as shown in Fig. 3(F) and Fig. 3(G). The fixed region 12AD is a region used later for fixing (holding) the welded body base material 10A to a jig or the like when the metal film 15 is formed. The fixed region 12AD may have any shape and size. The shape and size of the fixed region 12AD are selected appropriately according to the jig, or the like.

Then, as shown by outlined arrows, the coil 11 and the terminal piece 12C are pressed to each other, and are pressure-welded (cold pressure-welded) while a distance between the coil 11 and the terminal piece 12C is reduced by a prescribed amount. As a result, the dissimilar welded portion 16 including the aluminum coil 11 and the copper terminal 12 is formed (Fig. 5(C)). The dissimilar welded portion 16 is also formed in the straight portion STR excluding the direction change portions (corner portion) TN (of the coil 11 and the terminal 12).

Since burrs (not shown) due to pressure welding are also generated at the dissimilar welded portion 16, deburring is performed. In this example, the coil 11 on the terminal end portion 11EE side is similarly pressure-welded to the terminal piece 12C to form the dissimilar welded portion 16. In this way, the welded body base material 10A is formed.

Here, described in this example is the case where, after the helical structure 50 (coil 11) having a required number of turns is formed (completed), the end portion 11E is connected to the terminal piece 12C. However, the end portion 11E may be connected to the terminal piece 12C during the formation of the helical structure 50. For example, a first coil piece C may be pressure-welded to the terminal piece 12C first. Then, the first coil piece C may be pressure-welded to a next coil piece C, and by adding the coil pieces C, the helical structure 50 may be formed. Then, a terminal piece 12C may be connected to the last coil piece C to form the welded body base material 10A.

Next, the annealing step (step S13) is performed. The coils 11, which are made of metal materials (for example, copper plates), have internal distortion and residual stress due to work hardening in the bending step, the pressure welding step, or the like, of the coil pieces C. Accordingly, annealing is performed to remove these distortions and residual stresses and soften the structure in order to improve workability. As an example, the plurality of coils 11 is input into a heat treatment furnace (continuous annealing furnace) and heated to an appropriate temperature (e.g., a recrystallization temperature or higher) in an oxygen-free atmosphere (with inert gases introduced as necessary). The coils 11 are held for a prescribed time, and are slowly cooled in the furnace. With the annealing, the metal material constituting the coils 11 is changed into a structure without internal stress, and softens. The annealing also makes the coils 11 susceptible to plastic deformation. It can also be said that annealing is performed to control plasticity coefficients of the coils 11 (to lower the elastic limit of the coils 11). Although (the metal materials of) the coils 11 soften after annealing, the shape is maintained unless external force is applied to the coils 11. Then, the coils 11 are expanded or contracted in a helical axis direction to secure a prescribed gap between the respective regions CR for one turn. The gap to be secured is large enough to allow the metal film 15 to be successfully formed in a later step.

Then, the metal film forming step (step S15) is performed. This step includes a step of continuously covering a substantially entire part of the first member (helical structure, coil) 11 and at least a part of the second member (terminal) 12 with the metal film 15 containing copper as a main component. Here, as an example, a case of forming the metal film (copper plating film) 15 by a plate treatment will be described.

First, the fixed region 12AD of the terminal piece 12C is fixed to a jig or the like (not shown) as necessary. Then, the welded body base material 10A is subjected to a zincate treatment once or a plurality of times.

After that, the entire outer surface of the welded body base material 10A is covered with the metal film (copper plating film) 15, except for part of the fixed region 12AD, by a plate treatment (for example, electroplating). Prior to the metal film forming step, a prescribed gap (interval) is secured between the respective regions CR for one turn of the coils 11. Therefore, the plate treatment can be sufficiently performed even in the region in the middle of a turn of the helical structure.

Accordingly, the welded body base material 10A has the copper plating film (metal film) 15 formed on the entire outer surface (substantially 100% of the region) except for the fixed region 12AD. More specifically, the metal film 15 is formed to continuously and integrally cover substantially 100% of the outer surface of the coil 11, the outer surface of the dissimilar welded portion 16, and at least a part of the outer surface of the terminal 12 that is in continuity with the dissimilar welded portion 16.

Here, the method of forming the metal film 15 may be other method, such as vapor deposition. Thus, an optional method of forming the metal film 15 can be adopted, and after the coil (first member) 11 and the terminal (second member) 12 are welded together, that is, after the welded body base material 10A is formed, the metal film 15 is formed on the surface of the welded body base material 10A.

Then, as shown in Fig. 5(D), the fixed region 12AD portions of both the terminal pieces 12C are removed by, for example, cutting, punching, or excising, so that the terminal pieces 12C are processed into a desired shape (a shape expected as a completed shape) of the terminals 12 (see Figs. 3(F) and 3(G)). In this way, the terminals-welded coil 10 is formed as shown in Figs. 4(A) to 4(C).

When a part of the fixed region 12AD is fixed to a jig or the like, the metal film 15 is not formed on that part. However, the terminal 12 and the metal film 15 are made of metal of the same kind, and even when a region where no metal film 15 is formed is present in part of the terminal 12, the region in the terminal 12 still structurally constitutes an integrated structure without causing any problem. Meanwhile, substantially 100% of the outer surface of the dissimilar welded portion 16 and the coil (aluminum) 11, and at least a part of the terminal 12 are integrally covered with the metal film 15.

The insulation step (step S17) is performed as required. In this step, an insulating film 17 is formed over the entire terminals-welded coil 10. The insulating film 17 is formed, for example, through electrodeposition or the like by immersing the dissimilar metal welded body 10 in a solution containing a resin material (macromolecular compound). The resin material also enters the gap between the respective regions CR for one turn of the coil 11, and the periphery of a conductor, formed by continuously joining the coil pieces C from one end side to the other end side along the helical traveling direction, is continuously covered with the resin material. Hence, the plurality of regions CR for one turn overlapped in the coil 11 is insulated from each other (see Fig. 4(D).

In the case of forming the insulating film 17, the insulating film 17 may be formed (in the state shown in Fig. 5(C)) without removing the fixed region 12AD portions of both the terminal pieces 12C, and then the fixed regions 12AD may be removed as shown in Fig. 5(D).

When the insulating film 17 is formed, at least a part of the terminal 12 (or the terminal piece 12C) may be covered with a mask in advance so that no insulating film 17 is applied to that part of the terminal 12 (or terminal piece 12C). The entire terminals-welded coil 10 may be covered with the insulating film 17, and then the insulating film 17 in a prescribed region of the terminal 12 may be removed.

The terminals-welded coil 10 is a dissimilar metal welded body of aluminum (the coil 11) and copper (the terminal 12) as shown in Figs. 4(B) and 4(C), and the surface of the dissimilar metal welded body is entirely covered with a copper metal film (for example, copper plating film) 15. Therefore, since the underlying material for the insulating film 17 is an identical metal (copper) member as a whole, the insulating film 17 can be applied well.

When the insulating film 17 is formed by electrodeposition of macromolecular compounds in particular, the insulating film 17 is susceptible to the influence of the underlying metal. In other words, when the underlying metal is a welded body of dissimilar metals such as aluminum and copper, the metal difference has a larger influence on the thickness of the insulating film 17. In the present embodiment, even when the internal structure is the dissimilar metal welded body 10, the metal film 15 made of one kind of metal (copper) can be integrally formed on the surface of the dissimilar metal welded body 10 as an underlying material, so that the insulating film 17 can be formed with a uniform thickness. Here, the insulating film 17 may be formed by applying or spraying a resin material.

In the molding step (step S19), the terminals-welded coil 10 is molded so that the shape of the terminals-welded coil 10 is adjusted. In the molding step, alignment adjustment is performed by deforming (elastically deforming and/or plastically deforming) the coil 11 so that the centers of the winding of the respective regions CR for one turn coincide with a helical axis center SC of the coil 11. The coil 11 is also deformed (elastically deformed and/or plastically deformed) in the helical axis direction to appropriately adjust the gap between the regions CR for one turn. Furthermore, in the case of the coil 11 attached to the stator core, for example, the entire shape of the coil 11 may be molded to match the shape of the stator core to which the coil 11 is fitted, as necessary. In this way, the terminals-welded coil 10 is completed.

The method of manufacturing the terminals-welded coil 10 described above is an example. For example, before and/or after the annealing step, an intermediate molding step may be performed to adjust the shape of the dissimilar metal welded body 10 as appropriate. When the insulation step is performed, the insulation step may be performed concurrently with the molding step or, the insulation step may be performed after the molding step. The insulation step is not limited to covering it with an insulating resin, as long as an insulation step is performed to insulate the plurality of regions CR for one turn from each other. For example, the regions CR for one turn may be insulated by forming an insulating resin layer around each of the regions CR for one turn by resin processing methods such as injection molding (injection mold). In this case, since the shape of the coil 11 is fixed by the injection molding, the insulation step is performed after the molding step or concurrently with the molding step.

### <Other embodiments>

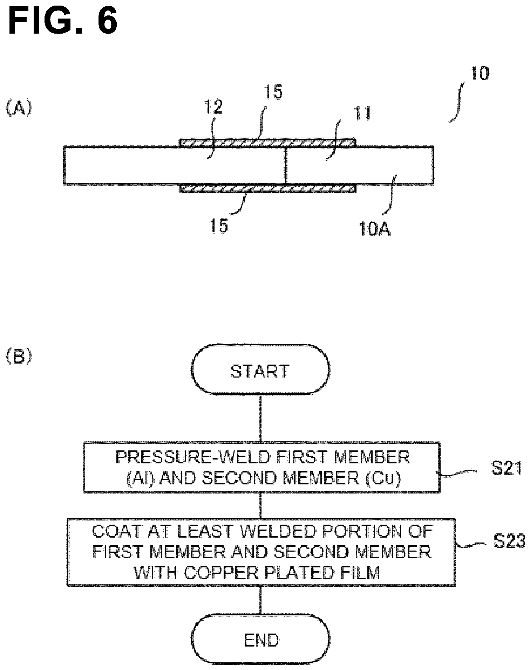

With reference to Fig. 6, another embodiment of the dissimilar metal welded body 10 will be described. Fig. 6(A) is a cross-sectional view corresponding to A-A cross-section of Fig. 1(A), showing another example of the dissimilar metal welded body 10. Fig. 6(B) is a flowchart showing an example of the method of manufacturing the dissimilar metal welded body 10.

As shown in Fig. 6(A), the dissimilar metal welded body 10 may be configured as a welded body of the first member 11 containing a first metal (for example, aluminum) as a main component and the second member 12 containing a second metal (for example, copper) as a main component. The metal film 15 may be provided so as to cover at least the welded portion (dissimilar welded portion) 16 between them, and part of the first member 11 may be exposed. In this case, the metal film 15 is a plating film (copper plating film) containing the second metal similar to that of the second member 12 as a main component. Providing the metal film 15 to cover at least the dissimilar welded portion 16 can prevent galvanic corrosion due to welding of dissimilar metals. This means that part of the first member 11 (for example, more than 50% of the entire first member 11) may be exposed when the insulating film 17 is not particularly required.

The method of manufacturing the dissimilar metal welded body 10 also includes a step (step S21) of pressure-welding an end face of the first member 11, containing the first metal as a main component, and an end face of the second member 12, containing the second metal as a main component, to form the dissimilar welded portion 16, and a step (step S23) of performing a plate treatment to cover at least the dissimilar welded portion 16 between the first member 11 and the second member 12 with the metal film 15 containing the second metal as a main component. Any optional method can be adopted as the plating treatment.

After the first member 11 and the second member 12 are welded together, that is, after the welded body base material 10A is formed, the metal film 15 is formed on the surface of the welded body base material 10A. Before the metal film 15 is formed, a zincate treatment may be applied to the dissimilar metal welded body 10 once or a plurality of times in advance.

Note that the configuration and the manufacturing method shown in Fig. 6 may be applied to the configuration and the manufacturing method of the terminals-welded coils 10 described before.

The coils 11 of the present embodiment have been described by taking as an example the edgewise coil in which a plurality of pieces of coil pieces C are pressure-welded to form a helical structure. However, the coils 11 are not limited to this example, and may have a helical structure formed by preparing a plurality of round wire-shaped coil pieces (conductors) C having a substantially round cross section crossing (orthogonal to) the longitudinal direction, and pressure-welding both end faces of the coil pieces C in the strip longitudinal direction. The coils 11 may also be formed by winding (wrapping) a (single) continuous long flat conductor or round wire conductor for a desired number of turns. The coils 11 may partially be configured by abutting and pressure-welding the end faces of a plurality of flat conductors (round wire conductors) to each other, and may partially be formed by winding. The coils 11 are not limited to the concentrated winding coils, and may be distributed winding coils.

The direction change portion TN is not limited to a substantially squire shape in the planar view, and may have a curved shape with a prescribed curvature.

In the above-described embodiments, the case where the dissimilar metal welded body 10 is the terminals-welded coil 10 has been illustrated. However, without being limited to this example, the first member 11 may be any one of a coil, a terminal, a bus bar (wiring), and the like. The second member 12 may be any one of a coil, a terminal, and a bus bar (wire), and the like. For example, the first member 11 may be a coil and the second member may be a bus bar. The first member 11 may be a terminal and the second member 12 may be a bus bar or the like.

In the above-described examples, a description has been given of the case where the first member 11 is made of aluminum and the second member 12 is made of copper. However, the metals (metal members) that constitute the first member 11 and the second member 12 may be such metals that one metal is relatively nobler than the other metal and that can be pressure-welded to each other. The metal film 15 may be a kind of metal that is same as one of the metals (for example, the metal that is relatively nobler). Specifically, on the premise that one metal is relatively nobler than the other metal, the first member 11 and the second member 12 may be non-ferrous metal-based materials, that is, metal members such as aluminum, an aluminum alloy, a copper nickel alloy, brass, zinc, silver, a silver alloy, nickel, gold, and other alloys to be specific, and may be selected from members plated with tin, plated with silver, and plated with nickel.

It should be noted that the present invention is not limited to the above-described embodiments, and it goes without saying that various modifications can be made without departing from the gist of the present invention.

### Reference Signs List

10 dissimilar metal welded body, terminals-welded coil
10A welded body base material
11 first member, coil
11E coil end portion
11EE terminal end portion
11ES starting end portion
12 second member, terminal
12AD fixed region
12AS end face
12BS end face
12X engagement portion
12C terminal piece
13 coil piece welded portion
15 metal film
16 welded portion (dissimilar welded portion)
17 insulating film
50 helical structure

## Claims

1. A dissimilar metal welded body comprising:
a first member made of a metal containing aluminum as a main component;
a second member made of a metal containing copper as a main component;
a welded portion formed by pressure-welding an end face of the first member and an end face of the second member to each other; and
a metal film that continuously covers a substantially entire part of the first member and at least a part of the second member, wherein
the metal film is a film made of a metal containing copper as a main component.

2. The dissimilar metal welded body according to claim 1, wherein the metal film has a thickness of 3 µm or less.

3. The dissimilar metal welded body according to claim 1 or 2, wherein one of the first member and the second member is an electroconductive component, and the other of them is a terminal, a wiring, or an electrode of the electroconductive component.

4. The dissimilar metal welded body according to any of claims 1 to 3, wherein the first member and the second member are each any one among a coil, a terminal, and a busbar.

5. The dissimilar metal welded body according to any of claims 1 to 4, wherein a resin film is provided on the metal film.

6. A method of manufacturing a dissimilar metal welded body, comprising:
a step of welding a first member made of a metal containing aluminum as a main component and a second member made of a metal containing copper as a main component by pressure-welding an end face of the first member and an end face of the second member to each other; and
a step of continuously covering a substantially entire part of the first member and at least a part of the second member with a metal film containing copper as a main component.

7. The method of manufacturing a dissimilar metal welded body according to claim 6, wherein the metal film is formed by a plating treatment.

8. The method of manufacturing a dissimilar metal welded body according to claim 6 or 7, wherein a zincate treatment is performed before the metal film is formed.

9. The method of manufacturing a dissimilar metal welded body according to any of claims 6 to 8, wherein a resin film is formed on the metal film.

10. A dissimilar metal welded body comprising:
a first member containing a first metal as a main component;
a second member containing a second metal as a main component that is nobler than the first metal;
a welded portion formed by pressure-welding an end face of the first member and an end face of the second member; and
a metal film that covers at least the welded portion, wherein
the metal film is a plated film containing the second metal as a main component.

11. The dissimilar metal welded body according to claim 10, wherein the first member is substantially entirely covered with the metal film.

12. A method of manufacturing a dissimilar metal welded body, comprising:
a step of pressure-welding an end face of a first member containing a first metal as a main component and an end face of a second member containing a second metal as a main component to each other to form a welded portion; and
a step of performing a plating treatment to cover at least the welded portion with a metal film containing the second metal as a main component.

13. The method of manufacturing a dissimilar metal welded body according to claim 12, wherein the metal film is formed so that the first member is substantially entirely covered with the metal film.
